# EUROPEAN PATENT SPECIFICATION

(11) **EP 3 293 636 B1**
(45) Date of publication and mention of the grant of the patent: **17.03.2021**
(21) Application number: 16187994.5
(22) Date of filing: 09.09.2016
(51) Int. Cl.: G06F 12/02, G06F 16/18, G06F 16/11

(54) **GENERIC LOG MEMORY SCAN**
GENERISCHER LOG-SPEICHER-SCAN
BALAYAGE DE MÉMOIRE DE CONSIGNATION GÉNÉRIQUE

(43) Date of publication of application: 14.03.2018
(73) Proprietor: Huawei Technologies Co., Ltd., Longgang District Shenzhen, Guangdong 518129 (CN)
(72) Inventor: ACKER, Ralph, 80992 Munich (DE)
(74) Representative: Goddar, Heinz J.

(56) References cited:
- US-A1- 2014 089 264
- US-A1- 2016 179 865
- GUY GOLAN-GUETA ET AL: "Scaling concurrent log-structured data stores", THE 2014 OTTAWA LINUX SYMPOSIUM (OLS '14), 1 January 2015 (2015-01-01), pages 1-14, XP055316387, New York, New York, USA DOI: 10.1145/2741948.2741973 ISBN: 978-1-4503-3238-5
- SRIRAM SUBRAMANIAN ET AL: "Snapshots in a flash with ioSnap", COMPUTER SYSTEMS, ACM, 2 PENN PLAZA, SUITE 701 NEW YORK NY 10121-0701 USA, 14 April 2014 (2014-04-14), pages 1-14, XP058048192, DOI: 10.1145/2592798.2592825 ISBN: 978-1-4503-2704-6

## Description

### TECHNICAL FIELD

The present invention relates to a memory management system for managing a log of segments and to a method for managing a log of segments. The present invention also relates to a computer-readable storage medium storing program code, the program code comprising instructions for carrying out such a method.

### BACKGROUND

Log structured storage is a sequence of data entries, often organized in storage entities of fix-sized segments. Typically, new data is appended to the log head and segments are immutable once the segment has been closed. We call these regular segments. An index structure is used to access data on the log. When data entries are updated, the index is adjusted to point to the new version at the head of the log. While new data replaces old entries, the log accumulates outdated entries of "dead data".

Garbage collection can pick up sparse segments, i.e. segments storing mostly dead data, move all live data to side segments, and update the index accordingly. Once a side segment has been filled, it can be chained as an injected segment to the log. At the same time the emptied segments are removed from the log. Therefore, the log contains the same data before and after exchanging segments.

Concurrency of garbage collection and append operations requires synchronization on the index structure and on the head segment. For this purpose, data may be continuously moved and reordered. According to prior art, the log's index allows only efficient direct read operations of individual data entries, concurrent to append and maintenance operations. Due to this permanent data shuffling and concurrent updates on the index, there is no efficient operation for scanning the entire log without restraining or even blocking these concurrent operations for obtaining a consistent snapshot of all live data.

Guy Golan-Gueta et al: "Scaling concurrent log-structured data stores", THE 2014 OTTAWA LINX SYMPOSIUM (OLS '14), 1 January 2015 pages 1-14, XP055316387, discloses an algorithm for scalable concurrency in LSM-DS, which exploits multiprocessor-friendly data structures and non-blocking synchronization.

US 2016/179865 A1 discloses concurrency control in log-structured merge (LSM) data stores. In one example, a call is received from a thread for writing a value to a key of LSM components. A shared mode lock is set on the LSM components in response to the call. The value is written to the key once the shared mode lock is set on the LSM components. The shared mode lock is released from the LSM components after the value is written to the key.

Sriram Subramanian et al: "Snapshots in a flash with ioSnap", Computer Systems, ACM, 2 Penn Plaza, Suite 701 New York, NY 10121-0701 USA, 14 April 2014, pages 1-14, XP058048192, discloses a flash optimized snapshot system which delivers low-overhead snapshots with minimal disruption to foreground traffic.

US 2014/089264 A1 discloses apparatuses, systems, and methods for snapshots of a non-volatile device. A method includes writing data in a sequential log structure for a non-volatile device. A method includes marking a point, in a sequential log structure, for a snapshot of data. A method includes preserving a logical-to-physical mapping for a snapshot based on a marked point and a temporal order for data in a sequential log structure.

### SUMMARY OF THE INVENTION

The invention is set out in the appended set of claims. The dependent claims set out particular embodiments. The objective of the present invention is to provide a system and a method for managing a log of segments, wherein the system and the method overcome one or more of the above-mentioned problems of the prior art.

A first aspect of the invention provides a memory management system for managing a log of segments, comprising:
- a scanning unit configured to determine a scan generation based on a current log generation, and
- a garbage collection unit configured to release a segment if the segment was cleaned during a log generation that is older than a minimum scan generation of one or more instances of the scanning unit,
wherein the scanning unit is configured to determine the scan generation when initiating a new scan and when encountering cleaned segments,
wherein a log scan entering the system acquires the complete set of segments that are part of the log and processes them one by one, wherein the scanning unit and the garbage collection unit are configured to be executed concurrently, wherein the garbage collection unit is configured to retrieve segments from said set and clean them, wherein the scanning unit is configured to skip a cleaned segment, the cleaned segment having been cleaned concurrently with an execution of an instance of the scanning unit.

The log generation and the scan generation can be for example integer variables. An older log generation may correspond to (indicated by) a smaller log generation, e.g. in the sense of a smaller log generation number.

The garbage collection unit can be configured to acquire a lock when moving between segments and when adding and removing segments from the log. These operations typically also comprise a step of incrementing the log's generation. The scanning unit can be implemented as a plurality of concurrently active processes. Each of these active processes may be referred to as instance of the scanning unit.

The system of the first aspect has the advantage that scanning at the level of snapshot consistency is possible without locking the entire data structure. The garbage collection unit may clean any segment, but may be configured to release the segment only if it belongs to an older generation than all active scans. This mechanism of eagerly updating scan generations allows efficiently reclaiming segments concurrently to active garbage collection.

In the system of the first aspect multiple concurrent scan operations can be performed on the complete log for obtaining a consistent snapshot of all data. Scan operations can be performed while write operations continuously append data to the log head and concurrent cleaning by the garbage collection unit manages free memory. The operations can coexist at the same time and are widely unaffected by each other.

The system of the first aspect has the advantage that an instance of the scanning unit knows at which scan generation it initiated a scan.

In a first implementation of the memory management system according to the first aspect, the scanning unit and/or the garbage collection unit are configured to:
- acquire a lock,
- choose a segment for processing, and
- release the lock.

This has the advantage that the scanning unit and/or the garbage collection unit hold the lock only for a relatively short time, thus reducing a potential performance degradation due to the lock to a minimum.

In a second implementation of the memory management system according to the first aspect as such or according to any of the preceding implementations of the first aspect, cooperative multitasking is used to ensure that only one instance of the scanning unit and the garbage collection unit is active at any time.

This can represent an efficient alternative to the pre-emptive multitasking of the third implementation. In particular, the scanning unit and/or the garbage collection unit can be configured to voluntarily yield control, e.g. when they are idle or periodically in predetermined time intervals.

In a third implementation of the memory management system according to the first aspect as such or according to any of the preceding implementations of the first aspect, the garbage collection unit is configured to write a segment generation into a segment of the log of segments, wherein the segment generation indicates when the segment was injected onto the log of segments.

This has the advantage that the scanning unit can know when the segment was injected onto the log of segments.

In a fourth implementation of the memory management system according to the first aspect as such or according to any of the preceding implementations of the first aspect, the scanning unit is configured to skip an entry of a segment if a time stamp of the entry is smaller than a time stamp of the last scanned log entry.

The skipping of entries with older timestamps has the advantage that performance is improved and processing entries multiple times is avoided.

In a fifth implementation of the memory management system according to the first aspect as such or according to any of the preceding implementations of the first aspect, wherein the scanning unit is configured to skip an injected segment whose last entry is older than a last entry read on a regular segment.

The scanning unit can recognize an injected segment for example based on a header entry of the segment. The scanning unit can recognize an age of an entry based on a time stamp stored at the entry position.

In other embodiments, an injected segment can be recognized by inspecting the time stamps.

In an sixth implementation of the memory management system according to the first aspect as such or according to any of the preceding implementations of the first aspect, the scanning unit is configured to process the segments in an order defined by IDs of the segments, wherein the IDs are assigned to the segments in a predefined order.

The predefined order can be e.g. an ascending order or a descending order. In other embodiments, chaining of segments may be used instead.

A second aspect of the invention refers to a method for managing a log of segments, the method comprising:
- a scan process, carried out by a scanning unit, determining a scan generation based on a current log generation, and
- a garbage collection process releasing a segment if the segment was cleaned during a log generation that is older than a minimum scan generation of one or more instances of the scanning unit,
wherein the method further comprises determining the scan generation when initiating a new scan and when encountering cleaned segments, wherein a log scan entering a system acquires the complete set of segments that are part of the log and processes them one by one, wherein the scan process and the garbage collection process are executed concurrently, wherein the garbage collection process retrieve segments from said set and cleans them, wherein the scan process skips a cleaned segment, the cleaned segment having been cleaned concurrently with an execution of an instance of
the scanning unit.

The methods according to the second aspect of the invention can be performed by the memory management system according to the first aspect of the invention. Further features or implementations of the method according to the second aspect of the invention can perform the functionality according to the first aspect of the invention and its different implementation forms.

In a further implementation of the method of the second aspect, the scanning process further includes determining the scan generation when initiating a new scan and/or when encountering cleaned segments.

In a first implementation of the method of the second aspect, the method further comprises:
- acquiring a lock,
- choosing a segment for processing, and
- releasing the lock.

In a second implementation of the method of the second aspect as such or according to the first implementation of the second aspect, cooperative multitasking is used to ensure that only one instance of the scanning unit and the garbage collection unit is active at any time.

In a further implementation of the method of the second aspect, the garbage collection process further writes a segment generation into a segment of the log of segments, wherein the segment generation indicates when the segment was injected onto the log of segments.

In a further implementation of the method of the second aspect, the method further includes, at the scanning process skipping an entry of a segment if a time stamp of the entry is smaller than a time stamp of the last scanned log entry.

In a further implementation of the method of the second aspect as such or according to the implementations of the second aspect, the method further includes, at the scanning process skipping a cleaned segment, the cleaned segment having been cleaned concurrently with an execution of an instance of the scanning unit.

In a further implementation of the method of the second aspect as such or according to the implementations of the second aspect, the method further includes, at the scanning process skipping an injected segment whose last entry is older than a last entry read on a regular segment.

In a further implementation of the method of the second aspect as such or according to the implementations of the second aspect, the method further includes, at the scanning process processing the segments in an order defined by IDs of the segments, wherein the IDs are assigned to the segments in a predefined order.

A third aspect of the invention refers to a computer-readable storage medium storing program code, the program code comprising instructions for carrying out the method of the second aspect or one of the implementations of the first aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a block diagram illustrating a memory management system in accordance with an embodiment of the present invention,
- FIG. 2: is a flow chart of a method for managing a log of segments in accordance with an embodiment of the present invention,
- FIG. 3: is a flow chart of a method for managing a log of segments in accordance with an embodiment of the present invention, and
- FIGs. 4, 5, 6A and 6B: show operations on the log segments in accordance with embodiments of the present invention.

### Detailed Description of the Embodiments

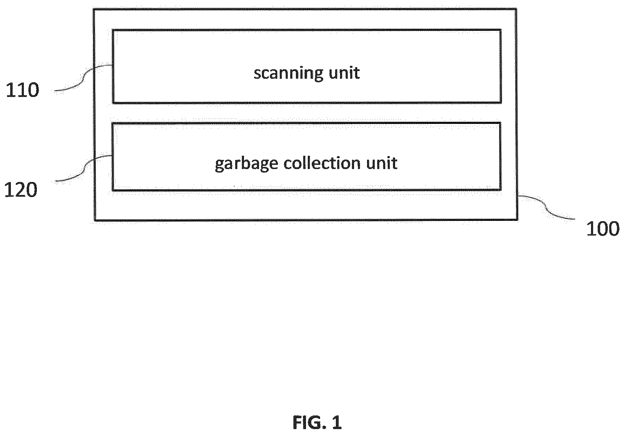

FIG. 1 shows a memory management system 100 for managing a log of segments. The memory management system comprises a scanning unit 110 and a garbage collection unit 120.

The memory management system 100 comprises a scanning unit 110 configured to determine a scan generation based on a current log generation.

The memory management system 100 comprises a garbage collection unit 120 configured to release a segment if the segment was cleaned during a log generation that is older than a minimum scan generation of one or more instances of the scanning unit.

Generations of the log state can be used to model atomic transactions of garbage collection on the log. The garbage collection unit 120 can be configured to modify the log in atomic transactions, i.e. cleaning transforms the log state from one generation to the next generation in a well-defined way.

Preferably, unique entry timestamps (e.g. local timestamps of entry creation, wherein any two entries on the log do not have the same timestamp) can be used to cluster and identify repetitive occurrences of entries moved by garbage collection.

Preferably, the scanning unit 110 is configured to skip over irrelevant segments and/or to fast-forward over a cluster of previously processed entries within segments. Thus, snapshot isolation and further performance improvements can be achieved.

Segment identifiers can be used for ordered and cooperative processing of log segments.

Short-time locking can be used for switching between segments. This locking is by several orders of magnitude shorter compared to locking the entire log for cleaning during a scan operation.

The system 100 of FIG. 1 presents a generational approach to log scanning that has low contention with parallel operations. Multiple independent scans can be active at the same time, each of them offering snapshot isolation, while supporting fully concurrent individual reads, appends, and garbage collection.

Preferably, the log of segments is used in memory, e.g. in random-access memory of a computer.

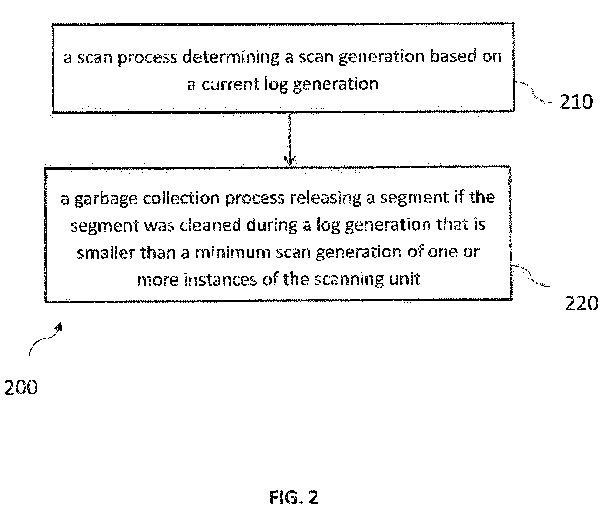

FIG. 2 shows a method 200 for managing a log of segments. The method 200 comprises a scan process 210 and a garbage collection process 220.

The method 200 comprises a scan process 210 determining a scan generation based on a current log generation.

The method 200 comprises a garbage collection process 220 releasing a segment if the segment was cleaned during a log generation that is older than a minimum scan generation of one or more instances of the scanning unit.

In a preferred embodiment, every entry on the log is marked with the unique timestamp of its insertion. Due to appends, all entries on a regular segment are ordered having ascending timestamps. Garbage collection preserves this ordering on side segments.

Preferably, cleaned and injected segments replace each other atomically in exchange operation γi - we call γi the generation i of the log state.

In a preferred embodiment, every segment is also assigned a unique, ascending segment identifier SID when created.

A log scan entering the system is assigned to the current γ. It will acquire the complete set of log segments using a short-time lock, and start processing the segments one by one.

The order of processing segments is preferably in ascending order of SIDs. At the same time, concurrent garbage collection can select any segments for cleaning, e.g. using heuristics based on age and sparsity. After a log scan has processed its complete list of segments, it will acquire another set of segments, this time with SIDs beyond the last processed segment. From now on, the log ahead of the scan position will contain new data that has been added after scan creation, but also duplicate data that has been moved by garbage collection.

The scan will refresh its segment list repeatedly, until it finally catches up with the log head. If the scan is too slow to catch up, it will eventually be invalidated by garbage collection.

Once the log head is reached, the scan can briefly lock the log's head exclusively, using the lock that also serializes append operations. Preferably, the lock is used only for reading the current head segment length and immediately released afterwards. The scan will process log entries until the known head offset, reacquire the lock briefly and refresh the length, until it finally catches up with the last entry. At this point, the scan will return end-of-data but holding the lock - this allows to perform some exclusive operation on the tip of the log, e.g. completing a set-update or data migration operation by means of a log scan. Finally, the lock can be released. With this the scan operation is complete.

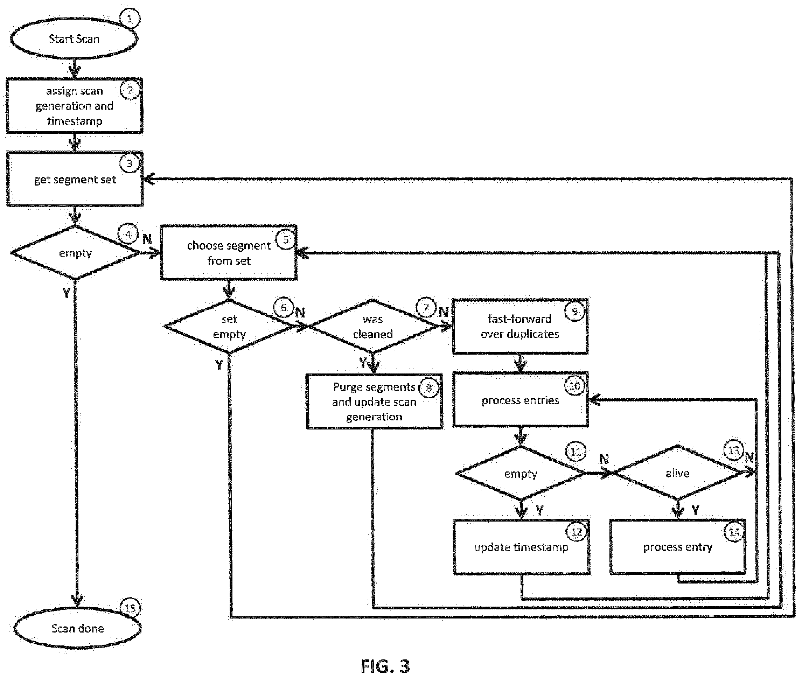

FIG. 3 is a flow chart illustrating a method for managing a log of segments.

A log scan entering the system (step 1) is assigned to the current generation of the log γ1 and also sets its internal timestamp for fast-forwarding over duplicates to zero (step 2). The log generation is a global counter. When the scan is created, it reads and stores the current value. The scan will acquire (step 3) the complete set of log segments using a short-time lock, and start processing the segments one by one. Whenever the returned set of segments is empty (step 4), the scan will terminate (step 15).

The log of any generation consists only of "active" segments. The scan acquires the complete set of segments that is initially completely "active", i.e. all segments are part of the log. Garbage collection will "steal" (retrieve) segments from this set and clean them, such that the scan's set is successively invalidated. The segments are still there for the scan to access, yet they contain only dead data and are therefore marked cleaned.

After releasing the lock, concurrent garbage collection may select any segments for cleaning, e.g. using heuristics based on age and sparsity, including those segments that are in the current set of the log scan. The lock is released immediately after acquiring the set of segments.

Processing of segments is done in a lockless manner - protected by the log generations. In addition, concurrent write operations may append new segments to the end of the log, which are not (yet) in the set of segments of the log scan.

The order of processing segments within its set is in ascending order of SIDs, until all segments have been processed (step 4). Therefore the segment with the smallest SID is chosen for processing and thereby removed from the scan's current set of segments (step 5). If the set of segments becomes empty (step 6), then a new set of segments is chosen in (step 3) with SIDs higher than that of the most recently processed segment. From now on, the log ahead of the scan position will contain new data that has been added after scan creation, but also duplicate data that has been moved by garbage collection.

When processing a new segment, the log scan first checks whether the segment has been cleaned (step 7) while it was waiting in the scans set of segments. If so, the segment is marked with the generation γ₂ in which it has been cleaned. This can be done by inspecting the segment. A cleaned segment is marked by the generation in which it was cleaned. Every segment has (stored e.g. at the beginning of the segment) an integer indicating the generation when it was cleaned. The scan will purge (step 8) all segments from its segment set, that have been cleaned since scan creation γ₁ to the current generation γ₃. Finally, the scan will update its own generation to γ₃ and proceed to the next segment in its set. The maintenance of generations is necessary to prevent garbage collection from invalidating segments that are in the segment set of any active scan, since the scan will access and process the segments in a lockless manner. Log cleaning may clean any segment, but memory is only released for those segments that belong to an older generation than all active scans. This mechanism of eagerly updating scan generations allows efficiently reclaiming memory concurrently to active garbage collection.

If the segment was not cleaned, it can either be a regular segment (appended, neither cleaned nor injected) or an injected segment that potentially may hold data that has been processed before. In case of an injected segment, the scan will fast-forward over duplicates (step 9). Therefore it exploits the invariant that entries are always stored in ascending timestamp order within the segment.

Whether a segment is injected can be marked in the segment header.

Cleaned segments can be "skipped" completely, since they contain only dead data. For injected segments the method can "fast-forward" over entries towards more recent entries, since the method has already processed the older entries at the beginning of the segment. The scan may skip all entries with timestamps older than its own timestamp. After doing so, the scan may process entries until reaching the end of the segment (step 11). Therefore the scan will check liveliness of each entry through the index (step 13). Once the end of a segment is reached, the scan will set its own timestamp (for later fast-forwarding over duplicates) to match the timestamp of the last processed live entry of the current segment updates its own timestamp for fast-forwarding over duplicates.

After finishing a segment, the scan will update its own timestamp to match the last processed live entry on the segment and move to the next segment (step 5), until the segment set is exhausted (step 6). If this happens, the scan will refresh its segment list repeatedly (step 3), until it finally catches up with the log head. A scan may be too slow to catch up, i.e. step 3 yields a bigger set of segments each time, in this case the scan will be eventually invalidated by garbage collection (logic of garbage collection is not shown in FIG. 3).

Scanning the head segment is not depicted and not a relevant part of the invention. The following merely outlines a practical approach. Once the log head is reached, to be checked in (step 7), the scan very briefly locks the log's head exclusively, using the lock that also serializes append operations. The lock is used only for reading the current head segment length and immediately released afterwards. The scan will process log entries until the known head offset, reacquire the lock briefly and refresh the length, until it finally caches up with the last entry. At this point, the scan will return end-of-data but holding the lock - this allows to perform some exclusive operation on the tip of the log, e.g. completing a set-update or data migration operation by means of a log scan. Finally, the lock can be released. With this, the scan operation is complete (step 15).

The scanning unit can be configured to store the following variables: Generation (integer), Timestamp, and/or set of segments (e.g. a list of SIDs). With each segment, the following variables can be stored: A segment ID (SID), generation (integer), and/or a pointer to the next segment. Furthermore, with each entry of a segment a timestamp can be stored.

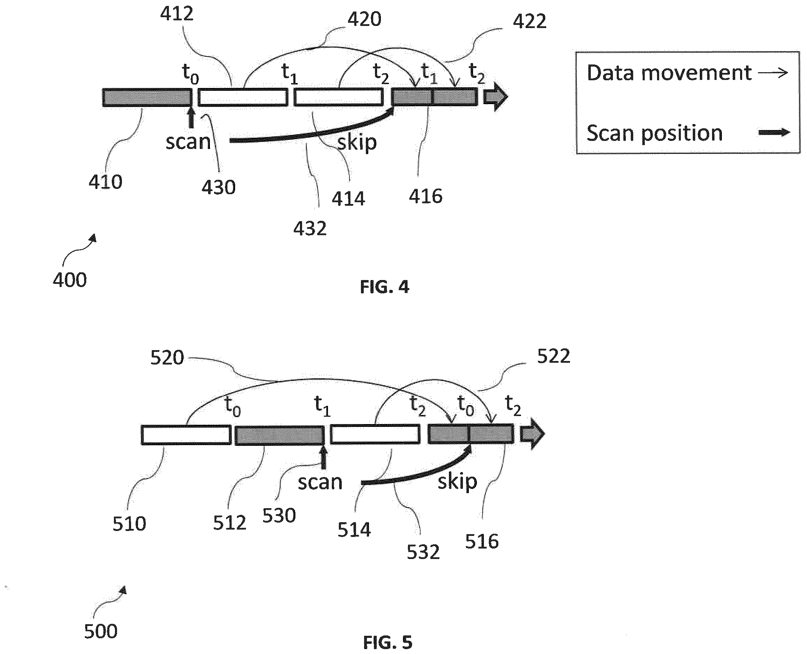

FIGs. 4 to 6B illustrate operations on the log segments. Therein, arrows above the log segments depict data movement, while arrows below the log segments depict movement of the scan position.

FIG. 4 shows a log of segments 400, comprising a first segment 410, a second segment 412, a third segment 414 and a fourth segment 416. A scan is currently at a position 430 at the end of the first segment 410. In garbage collection operations 420, 422, entries from the second and third segment 412, 414 were copied to the fourth segment 416. Thus, the second and third segment 412, 414 do not carry any live entries.

While processing individual log entries, the scan has to distinguish live data from irrelevant entries. An entry is alive if the index points to its log position. The scan will also use entry timestamps tᵢ to avoid reading data repeatedly. We can always skip entire cleaned segments without analyzing their contents. They contain only dead data. Live data has been moved ahead. Thus, the second and third segment 412, 414 can be skipped in step 432, without analysing their content.

FIG. 5 shows a log of segments 510, 512, 514, 516, wherein live entries of the first segment 510 and the third segment 514 have been moved in garbage collection steps 520, 522 to the fourth segment 516. During the scan operation, the third segment 514 can be skipped because it has been cleaned, and the first part of the fourth segment 516 can be skipped ("fast-forwarded") until an entries is found whose time stamp, here: t₂, is found is newer than the last timestamp that was seen by the scan operation on a regular segment. Therefore, the scan operation can jump from a first position 530 to a middle of the fourth segment 516 in a skipping step 532.

Fast-forwarding can involve scanning sequentially entry by entry. An alternative is to maintain within each segment an index of timestamps and offsets demarking the beginning of a cluster of entries from one segment.

When encountering an injected segment whose last entry is older than the last entry we saw on a regular segment, we skip the entire segment. This can be accomplished by fast-forwarding techniques described earlier, but more efficiently by maintaining the youngest timestamp for each segment of the log.

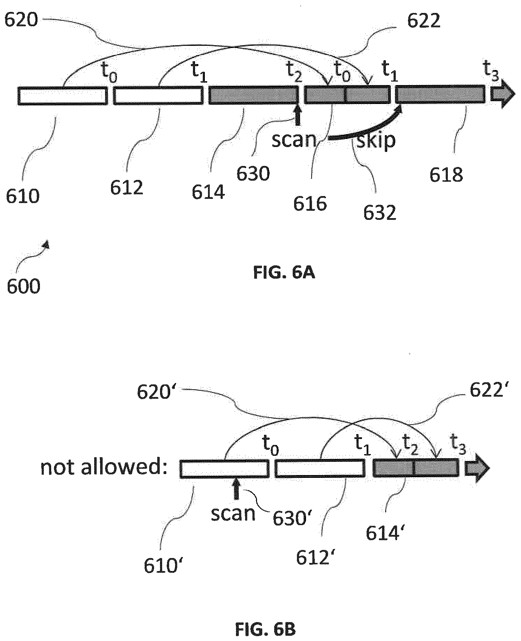

FIG. 6A shows a log of segments 600 which comprises five segments 610, 612, 614, 616, 618, wherein live entries of the first and second segment 610, 612 have been moved in garbage collection operations 620, 622 to the fourth segment 616. A scan is currently at position 630 at the end of the third segment 614.

Concurrently to the scan operation, the garbage collection may choose an arbitrary set of segments for cleaning, then it can start moving live entries from these segments to side segments. During this procedure, the index can be updated to point to the moved version of live entries on the side segment.

FIG. 6B illustrates a situation where concurrent scanning and cleaning of one segment can lead to undefined results. In particular, a scan operation occurs at a position 630' of a first segment 610' where a concurrent cleaning operation 620' is on its way (as well as a further cleaning operation 622'). The cleaning operations 620', 622' move entries from the first and second segment 610', 612' to a third segment 614'. Concurrent access of cleaning operation 620' and scanning operation at position 630 may lead to undefined results, therefore, the situation of concurrent access as illustrated in FIG. 6B should be prevented.

Short-time locking when switching segments prevents that garbage collection and scans concurrently access the same segment. Correspondingly, the garbage collection acquires the lock when switching from one segment to the other. Typically, both scan and garbage collection update their current segment id under lock protection.

When moving entries to side segments completes, the garbage collection will remove the set of cleaned segments from the log and add the side segments to the log and mark them with the current generation of the log. Finally, this transition also increases the generation of the log. Adding, removing, and marking segments, as well as incrementing the generation is protected by acquiring the lock.

Finally, any cleaned segment may be released and its memory may be reused for new segments or other purposes, if and only if all active scans have a generation that is higher that the cleaning generation of the log. This guarantees that the cleaned segment is not part of any scan's segment set.

Embodiments of the invention can have one or more of the following advantages:
- Multiple independent scans can be performed with snapshot isolation concurrent to individual reads, appends, and garbage collection.
- Significant speed-up by skipping entire segments and fast-forwarding over clustered entries
- Lockless for most of time, e.g. processing thousands of log entries on one segment
- Very short locking (tens of CPU cycles) against concurrent writers when iterating over head segment.
- Short locking (hundreds of CPU cycles) when switching segments against concurrent garbage collection
- Negligible restrictions on garbage collection when choosing segments (may not choose scanned segments)
- The scanning algorithm can cooperate with garbage collection for reclaiming free memory
- The scanning algorithm can consider only live data, which saves network bandwidth compared to other approaches.

Applications for the above presented methods can include:
- Acquiring a partial or complete copy of the log's most recent state for migration or backup of data.
- Consistently selecting data entities that satisfy some condition at a given time (query with isolation)
- Post-processing of data entries, e.g. for mass updates, validation, or subscribe & notify

The foregoing descriptions are only implementation manners of the present invention, the scope of the present invention is not limited to this. Therefore, the protection scope of the present invention should be subject to the protection scope of the attached claims.

## Claims

1. A memory management system (100) for managing a log of segments (400; 500; 600), comprising:
- a scanning unit (110) configured to determine a scan generation based on a current log generation, and
- a garbage collection unit (120) configured to release a segment (410-416; 510-516; 610-618) if the segment was cleaned during a log generation that is older than a minimum scan generation of one or more instances of the scanning unit,
wherein the scanning unit (110) is configured to determine the scan generation when initiating a new scan and when encountering cleaned segments, wherein a log scan entering the system acquires the complete set of segments that are part of the log and processes them one by one, wherein the scanning unit and the garbage collection unit are configured to be executed concurrently, wherein the garbage collection unit is configured to retrieve segments from said set and clean them, wherein the scanning unit is configured to skip a cleaned segment, the cleaned segment having been cleaned concurrently with an execution of an instance of the scanning unit.

2. The system of one of the previous claims, wherein the scanning unit (110) and/or the garbage collection unit (120) are configured to:
- acquire a lock,
- choose a segment for processing, and
- release the lock.

3. The system (100) of one of the previous claims, wherein cooperative multitasking is used to ensure that only one instance of the scanning unit (110) and the garbage collection unit (120) is active at any time.

4. The system (100) of one of the previous claims, wherein the garbage collection unit (120) is configured to write a segment generation into a segment of the log of segments, wherein the segment generation indicates when the segment was injected onto the log of segments.

5. The system (100) of one of the previous claims, wherein the scanning unit (110) is configured to skip an entry of a segment if a time stamp of the entry is smaller than a time stamp of the last scanned log entry.

6. The system (100) of one of the previous claims, wherein the scanning unit (110) is configured to skip an injected segment whose last entry is older than a last entry read on a regular segment.

7. The system (100) of one of the previous claims, wherein the scanning unit (110) is configured to process the segments in an order defined by IDs of the segments, wherein the IDs are assigned to the segments in a predefined order.

8. A method (200) for managing a log of segments (400; 500; 600), the method comprising:
- a scan process, carried out by a scanning unit, determining (210) a scan generation based on a current log generation, and
- a garbage collection process releasing (220) a segment (410-416; 510-516; 610-618) if the segment was cleaned during a log generation that is older than a minimum scan generation of one or more instances of the scanning unit,
wherein the method further comprises determining the scan generation when initiating a new scan and when encountering cleaned segments, wherein a log scan entering a system acquires the complete set of segments that are part of the log and processes them one by one, wherein the scan process and the garbage collection process are executed concurrently, wherein the garbage collection process retrieves segments from said set and cleans them, wherein the scan process skips a cleaned segment, the cleaned segment having been cleaned concurrently with an execution of an instance of the scanning unit.

9. The method (200) of claim 8, further comprising:
- acquiring a lock,
- choosing a segment for processing, and
- releasing the lock.

10. The method (200) of claim 8, wherein the garbage collection process is carried out by a garbage collection unit and cooperative multitasking is used to ensure that only one instance of the scanning unit and the garbage collection unit is active at any time.

11. A computer-readable storage medium storing program code, the program code comprising instructions that when executed by a processor carry out the method of one of claims 8 to 10.

## Patentansprüche

1. Speicherverwaltungssystem (100) zur Verwaltung eines Logs von Segmenten (400; 500; 600), das Folgendes aufweist:
- eine Scaneinheit (110), ausgelegt zum Bestimmen einer Scan-Generation basierend auf einer aktuellen Log-Generation, und
- eine Speicherbereinigungseinheit (120), ausgelegt zum Freigeben eines Segments (410-416; 510-516; 610-618), wenn das Segment während einer Log-Generation bereinigt wurde, die älter ist als eine minimale Scan-Generation von einer oder mehreren Instanzen der Scaneinheit,
wobei die Scaneinheit (110) ausgelegt ist zum Bestimmen der Scan-Generation, wenn ein neuer Scan initiiert wird und wenn bereinigte Segmente gefunden werden, wobei ein Log-Scan, der in das System gelangt, die komplette Menge von Segmenten erfasst, die Teil des Logs sind, und diese eines nach dem anderen verarbeitet, wobei die Scaneinheit und die Speicherbereinigungseinheit dazu ausgelegt sind, gleichzeitig ausgeführt zu werden, wobei die Speicherbereinigungseinheit ausgelegt ist zum Abrufen von Segmenten aus der Menge und Bereinigen derselben, wobei die Scaneinheit dazu ausgelegt ist, ein bereinigtes Segment zu überspringen, wobei das bereinigte Segment gleichzeitig mit einer Ausführung einer Instanz der Scaneinheit bereinigt wurde.

2. System nach einem der vorhergehenden Ansprüche, wobei die Scaneinheit (110) und/oder die Speicherbereinigungseinheit (120) ausgelegt sind zum:
- Einrichten einer Sperre,
- Auswählen eines Segments zur Verarbeitung, und
- Freigeben der Sperre.

3. System (100) nach einem der vorhergehenden Ansprüche, wobei kooperatives Multitasking verwendet wird, um sicherzustellen, dass jederzeit nur eine Instanz der Scaneinheit (110) und der Speicherbereinigungseinheit (120) aktiv ist.

4. System (100) nach einem der vorhergehenden Ansprüche, wobei die Speicherbereinigungseinheit (120) ausgelegt ist zum Schreiben einer Segment-Generation in ein Segment des Logs von Segmenten, wobei die Segment-Generation anzeigt, wann das Segment in das Log von Segmenten eingebracht wurde.

5. System (100) nach einem der vorhergehenden Ansprüche, wobei die Scaneinheit (110) dazu ausgelegt ist, einen Eintrag eines Segments zu überspringen, wenn ein Zeitstempel des Eintrags kleiner als ein Zeitstempel des letzten gescannten Log-Eintrags ist.

6. System (100) nach einem der vorhergehenden Ansprüche, wobei die Scaneinheit (110) dazu ausgelegt ist, ein eingebrachtes Segment zu überspringen, dessen letzter Eintrag älter als ein letzter, auf einem regulären Segment gelesener Eintrag ist.

7. System (100) nach einem der vorhergehenden Ansprüche, wobei die Scaneinheit (110) ausgelegt ist zum Verarbeiten der Segmente in einer durch IDs der Segmente definierten Reihenfolge, wobei die IDs den Segmenten in einer vordefinierten Reihenfolge zugewiesen werden.

8. Verfahren (200) zur Verwaltung eines Logs von Segmenten (400; 500; 600), wobei das Verfahren Folgendes aufweist:
- einen Scanprozess, ausgeführt durch eine Scaneinheit, der eine Scan-Generation basierend auf einer aktuellen Log-Generation bestimmt (210), und
- einen Speicherbereinigungsprozess (220), der ein Segment (410-416; 510-516; 610-618) freigibt, wenn das Segment während einer Log-Generation bereinigt wurde, die älter ist als eine minimale Scan-Generation von einer oder mehreren Instanzen der Scaneinheit,
wobei das Verfahren ferner Bestimmen der Scan-Generation aufweist, wenn ein neuer Scan initiiert wird und wenn bereinigte Segmente gefunden werden, wobei ein Log-Scan, der in das System gelangt, die komplette Menge von Segmenten erfasst, die Teil des Logs sind, und diese eines nach dem anderen verarbeitet, wobei der Scanprozess und der Speicherbereinigungsprozess gleichzeitig ausgeführt werden, wobei der Speicherbereinigungsprozess Segmente aus der Menge abruft und sie bereinigt, wobei der Scanprozess ein bereinigtes Segment überspringt, wobei das bereinigte Segment gleichzeitig mit einer Ausführung einer Instanz der Scaneinheit bereinigt wurde.

9. Verfahren (200) nach Anspruch 8, das ferner Folgendes aufweist:
- Einrichten einer Sperre,
- Auswählen eines Segments zur Verarbeitung, und
- Freigeben der Sperre.

10. Verfahren (200) nach Anspruch 8, wobei der Speicherbereinigungsprozess durch eine Speicherbereinigungseinheit ausgeführt wird und kooperatives Multitasking verwendet wird, um sicherzustellen, dass jederzeit nur eine Instanz der Scaneinheit und der Speicherbereinigungseinheit aktiv ist.

11. Computerlesbares Speichermedium, das Programmcode speichert, wobei der Programmcode Anweisungen aufweist, die, wenn durch einen Prozessor ausgeführt, das Verfahren nach einem der Ansprüche 8 bis 10 ausführen.

## Revendications

1. Système de gestion de mémoire (100) pour gérer un journal de segments (400 ; 500 ; 600), comprenant :
- une unité de balayage (110) configurée pour déterminer une génération de balayage sur la base d'une génération de journal actuelle, et
- une unité de récupération de place en mémoire (120) configurée pour libérer un segment (410-416 ; 510- 516; 610-618) si le segment a été nettoyé durant une génération de journal qui est plus ancienne qu'une génération de balayage minimum d'une ou de plusieurs instances de l'unité de balayage,
dans lequel l'unité de balayage (110) est configurée pour déterminer la génération de balayage lors de l'initialisation d'un nouveau balayage et lors de la découverte de segments nettoyés, dans lequel un balayage de journal entrant dans le système acquiert l'ensemble complet de segments qui font partie du journal et les traite un par un, dans lequel l'unité de balayage et l'unité de récupération de place en mémoire sont configurées pour être exécutées simultanément, dans lequel l'unité de récupération de place en mémoire est configurée pour récupérer des segments à partir dudit ensemble et les nettoyer, dans lequel l'unité de balayage est configurée pour sauter un segment nettoyé, le segment nettoyé ayant été nettoyé simultanément avec une exécution d'une instance de l'unité de balayage.

2. Système selon l'une des revendications précédentes, dans lequel l'unité de balayage (110) et/ou l'unité de récupération de place en mémoire (120) sont configurées pour :
- acquérir un verrou,
- sélectionner un segment à traiter, et
- libérer le verrou.

3. Système (100) selon l'une des revendications précédentes, dans lequel une multitâche coopérative est utilisée pour garantir que seulement une instance de l'unité de balayage (110) et de l'unité de récupération de place en mémoire (120) est active à tout moment.

4. Système (100) selon l'une des revendications précédentes, dans lequel l'unité de récupération de place en mémoire (120) est configurée pour écrire une génération de segment dans un segment du journal de segments, dans lequel la génération de segment indique l'instant auquel le segment a été injecté sur le journal de segments.

5. Système (100) selon l'une des revendications précédentes, dans lequel l'unité de balayage (110) est configurée pour sauter une entrée d'un segment si une estampille temporelle de l'entrée est inférieure à une estampille temporelle de l'entrée de journal balayée en dernier.

6. Système (100) selon l'une des revendications précédentes, dans lequel l'unité de balayage (110) est configurée pour sauter un segment injecté dont la dernière entrée est plus ancienne qu'une dernière entrée lue sur un segment régulier.

7. Système (100) selon l'une des revendications précédentes, dans lequel l'unité de balayage (110) est configurée pour traiter les segments dans un ordre défini par des ID des segments, dans lequel les ID sont attribués aux segments dans un ordre prédéfini.

8. Procédé (200) pour gérer un journal de segments (400 ; 500 ; 600), le procédé comprenant :
- un processus de balayage, réalisé par une unité de balayage, déterminant (210) une génération de balayage sur la base d'une génération de journal actuelle, et
- un processus de récupération de place en mémoire libérant (220) un segment (410-416 ; 510-516 ; 610- 618) si le segment a été nettoyé durant une génération de journal qui est plus ancienne qu'une génération de balayage minimum d'une ou de plusieurs instances de l'unité de balayage,
le procédé comprenant en outre la détermination de la génération de balayage lors de l'initialisation d'un nouveau balayage et lors de la découverte de segments nettoyés, dans lequel un balayage de journal entrant dans un système acquiert l'ensemble complet de segments qui font partie du journal et les traite un par un, dans lequel le processus de balayage et le processus de récupération de place en mémoire sont exécutés simultanément, dans lequel le processus de récupération de place en mémoire récupère des segments à partir dudit ensemble et les nettoie, dans lequel le processus de balayage saute un segment nettoyé, le segment nettoyé ayant été nettoyé simultanément avec une exécution d'une instance de l'unité de balayage.

9. Procédé (200) selon la revendication 8, comprenant en outre :
- l'acquisition d'un verrou,
- la sélection d'un segment à traiter, et
- la libération du verrou.

10. Procédé (200) selon la revendication 8, dans lequel le processus de récupération de place en mémoire est réalisé par une unité de récupération de place en mémoire et une multitâche coopérative est utilisée pour garantir que seulement une instance de l'unité de balayage et de l'unité de récupération de place en mémoire est active à un instant donné.

11. Support de stockage lisible par ordinateur stockant un code de programme, le code de programme comprenant des instructions qui, lorsqu'elles sont exécutées par un processeur, réalisent le procédé d'une des revendications 8 à 10.
